(19) Europäisches Patentamt
European Patent Office
Office européen des brevets

(11) Veröffentlichungsnummer: **0 002 497**
**A1**

(12) # EUROPÄISCHE PATENTANMELDUNG

(21) Anmeldenummer: 78101590.4

(22) Anmeldetag: 07.12.78

(51) Int. Cl.$^2$: C 22 B 7/00
C 22 B 3/00, C 02 C 5/04

(30) Priorität: 21.12.77 DE 2756924

(43) Veröffentlichungstag der Anmeldung:
27.06.79 Patentblatt 79/13

(84) Benannte Vertragsstaaten:
BE DE FR GB NL

(71) Anmelder: Duisburger Kupferhütte
Postfach 100103
D-4100 Duisburg(DE)

(72) Erfinder: Lippert, Karl, Dr.
Tilsiter Ufer 32
D-4100 Duisburg 26(DE)

(72) Erfinder: Dommain, Klaus, Dr.
Insterburger Weg 29
D-4100 Duisburg 26(DE)

(74) Vertreter: Bünemann, Gerhard, Dr. et al,
BAYER AG c/o Zentralbereich Patente Marken und Lizenzen
D-5090 Leverkusen-Bayerwerk(DE)

(54) **Verfahren zur Aufarbeitung verbrauchter ammoniakalischer Kupfer-Ätzlösungen.**

(57) Die vorliegende Erfindung betrifft ein Verfahren zur Aufarbeitung ammoniak- und/oder ammoniumhaltiger verbrauchter Kupfer-Ätzlösungen durch Chlorierung. Hierbei werden die Lösungen in Gegenwart überschüssiger oxidischer und/oder hydroxidischer Nichteisenmetall-haltiger Recycling-Materialien mit elementarem Chlor behandelt. Der ungelöst verbleibende Anteil an Nichteisenmetall-Oxiden und/oder -Hydroxiden wird in bekannter Weise mit mineralischen Säuren in Lösung gebracht und diese Lösung auf ihre Metallinhalte aufgearbeitet.

EP 0 002 497 A1

Croydon Printing Company Ltd.

0002497



DUISBURGER KUPFERHÜTTE 4100 Duisburg
Je/Bä

Verfahren zur Aufarbeitung verbrauchter ammoniakalischer Cu-Ätzlösungen

Die vorliegende Erfindung betrifft ein Verfahren zur Aufarbeitung $NH_3$- und/oder $NH_4^+$-haltiger verbrauchter Cu-Ätzlösungen durch Chlorierung.

Die Aufarbeitung verbrauchter $NH_3$- und/oder $NH_4^+$-haltiger Cu-Ätzlösungen ist sehr aufwendig. So besteht ein Aufarbeitungsverfahren für solche Lösungen darin, das Cu im schwach sauren Gebiet als Sulfid auszufällen (Hartinger, L., Taschenbuch der Abwasserbehandlung für die metallverarbeitende Industrie, Bd. 1, S. 256, München, Wien, 1976); die als Fällmittel erforderlichen Reagenzien $Na_2S$ und $H_2S$ sind teuer, ebenso ist die erforderliche weitere Aufarbeitung der hierbei anfallenden Ammonsalzlösung sehr aufwendig.

Es wurde nun ein Verfahren gefunden, bei dem die Aufarbeitung der obengenannten Abfallösungen mit der Aufarbeitung NE-metalloxid- und/oder hydroxidhaltiger Recycling-Materialien, z. B. Fällschlämmen oder Schachtofenoxiden, kombiniert wird, und zwar mit der Aufarbeitung letzterer durch saure Laugung, bei der die Metallinhalte in Lösung gebracht werden, gemäß:

$$MeO + 2\ H^{+} \qquad Me^{++} + H_2O \qquad \text{bzw.} \qquad (1)$$

$$Me(OH)_2 + 2\ H^{+} \qquad Me^{++} + 2\ H_2O \qquad (2)$$

Dabei werden nach der bekannten sauren Laugung geringe Anteile an säureunlöslichem $Me^{o}$ und/oder an Me-Sulfiden durch Behandlung mit elementarem Chlor in Lösung gebracht, wonach die Metalle aus dieser Lösung in bekannter Weise gewonnen werden (Erzmetall, Bd. 29 (1976), Heft 1, S. 32).

Gegenstand der vorliegenden Erfindung ist daher ein Verfahren zur Aufarbeitung $NH_3$- und/oder $NH^{+}$-haltiger verbrauchter Cu-Ätzlösungen, dadurch gekennzeichnet, daß man in einem Kombinationsverfahren die Lösungen in Gegenwart überschüssiger oxidischer und/oder hydroxidischer NE-metallhaltiger Recycling-Materialien mit elementarem Chlor behandelt und den noch ungelöst verbliebenen Anteil an NE-Metalloxiden und/oder -hydroxiden in bekannter Weise mit mineralischen Abfallsäuren in Lösung bringt und diese Lösung auf ihre Metallinhalte aufarbeitet.

Gibt man nun in die Anschlämmung derartiger oxidischer und/oder hydroxidischer Recycling-Materialien erfindungsgemäß vor der sauren Auflösung die obengenannten verbrauchten Ätzlösungen und behandelt die Suspension mit elementarem Chlor, so reagieren $NH_3$ und $NH_4^{+}$ gemäß

$$2\ NH_3 + 3\ Cl_2 \qquad N_2 + 6\ HCl \qquad \text{bzw.} \qquad (3)$$

$$2\ NH_4^+ + 3\ Cl_2 \qquad N_2 + 6\ HCl + 2\ H^+ \qquad (4)$$

Derartige Chlorierungsreaktionen sind zwar bekannt, werden aber nur bei der Abwasserreinigung, d.h. nur in stark verdünnten Lösungen angewandt und erfordern erhebliche Chlorüberschüsse.

Bei dem erfindungsgemäßen Verfahren wird die nach den Reaktionen (3) und (4) freiwerdende Säure sofort durch NE-Metalloxid und/oder Metallhydroxid gemäß (1) und/oder (2) gebunden. Die Verhältnisse müssen so gewählt werden, daß auch am Ende der Chlorierungsreaktion (3) bzw. (4) noch überschüssiges MeO bzw. $Me(OH)_2$ gemäß Gleichungen (1) bzw. (2) vorliegen. Damit ist die Aufrechterhaltung von pH-Werten oberhalb von etwa 2,5 gewährleistet, bei denen sowohl ein schneller und quantitativer Umsatz nach (3) und/oder (4) stattfindet, als auch der Endpunkt dieser Chlorierreaktionen durch einen steilen Anstieg des Chlorpotentials angezeigt wird. Die Chlorierung wird also vorzugsweise durch Messung des Chlorpotentials verfolgt.

Vorzugsweise wird die Chlorierung in Gegenwart eines schaumdämpfenden Mittels durchgeführt. Bevorzugt wird hierfür ein Alkoxylat linearer Fettalkohole eingesetzt.

Der gemäß den Gleichungen (3) bzw. (4) entstehende Chlorwasserstoff ersetzt im erfindungsgemäßen Verfahren einen entsprechenden Anteil der bei der bisher üblichen sauren Laugung zur Auflösung der oxidischen und/oder hydroxidischen Stoffe benötigten Säure.

Das erfindungsgemäße Verfahren wird durch das folgende Beispiel näher erläutert, ohne auf die dort genannten Stoffe nach Art und Menge beschränkt zu sein.

Beispiel

Die erfindungsgemäße Aufarbeitung einer verbrauchten ammoniakalischen Cu-Ätzlösung mit 132 g/l freiem $NH_3$ und 105 g/l Cu in Kombination mit der Aufarbeitung eines Schachtofenoxids mit 2,7 % Cu und 44,8 % Zn wird im folgenden beschrieben. Danach muß bei Ende der $NH_3$-Chlorierung ein deutlicher Überschuß an MeO und/oder $Me(OH)_2$, in unserem Falle von ZnO, vorliegen.

Dazu ist es erforderlich, die Alkalität des Schachtofenoxids zu kennen, die durch Titration mit 65 %iger Schwefelsäure bis pH 2 bei 60°C zu 1,7 Säureäquivalenten/100 g Schachtofenoxid ermittelt wurde.

Das Verhältnis Schachtofenoxid/Cu-Ätzlösung wurde nun so berechnet, daß nur 75 % des aus obiger Titration bekannten Säurebedarfs mittels der aus der $NH_3$-Chlorierung gemäß Gleichung (3) entstehenden HCl angeboten werden. Die Rechnung ergab ein Verhältnis von 300 g Schachtofenoxid zu 164 ml Cu-Ätzlösung der obengenannten Zusammensetzung.

Diese 300 g des genannten Schachtofenoxids wurden mit Wasser und 164 ml der genannten verbrauchten Cu-Ätzlösung zu 2 l Suspension angerührt und auf 60°C erhitzt. Der pH-Wert betrug 8,3. Dann wurd nach Zufügung einiger Tropfen eines schaumdämpfenden Mittels (Lutensol-L) elementares Chlor mit 8 l/h eingeleitet, wobei sich nach kurzer Zeit ein Potential von rund 1400 mV einstellte. (Pt-Thalamid).

Die Chloreinleitung wurde fortgesetzt bis zum Erreichen eines Potentials von 1750 mV, das in einem steilen Anstieg erreicht wurde. Der Chlorverbrauch betrug 154,5 g. Der pH-Wert war bis zu diesem Zeitpunkt auf 4,5 abgefallen; es wurde mit 65 %iger Schwefelsäure bis zum Erreichen eines pH-Wertes von 2,0 angesäuert.

Das Potential, das hierbei abgefallen war, wurde durch kurzes Nachchlorieren mit 1,5 g Chlor auf 1800 mV gebracht.

Nach Filtration und Waschen des Rückstandes auf einer Nutsche wurden 2,5 l Lösung mit 53,5 g/l Zn, 10,0 g/l Cu und 13 mg/l $NH_3$ erhalten. Das entspricht einem NE-Metallausbringen von 98,7 % Cu und 99,5 % Zn bei gleichzeitiger $NH_3$-Vernichtung von mehr als 99,9 %, wobei insgesamt 156 g Chlor und 57 g $H_2SO_4$ verbraucht wurden.

Um diese Ergebnisse des erfindungsgemäßen Kombinationsverfahrens mit denen des bekannten Verfahrens der sauren Laugung vergleichen zu können, wurde folgender Testversuch angestellt:

300 g des gleichen Schachtofenoxids wurden mit Wasser zu 2 l Suspension angerührt, auf 60°C erhitzt und im Laufe von 30 min mit 65 %iger Schwefelsäure bis zum Erreichen eines pH-Wertes von 2,0 versetzt. Der Schwefelsäureverbrauch betrug 250 g $H_2SO_4$ (= 5,1 Säureäquivalente). Anschließend wurde elementares Chlor bis zum Erreichen eines Potentials von 1800 mV (Pt-Thalamid) eingeleitet. An Chlor wurden 19,1 g verbraucht. Nach Filtration und Waschen des Rückstandes auf einer Nutsche wurden 2,5 l Lösung mit 3,12 g/l Cu und 53,3 g/l Zn entsprechend einem NE-Metall-Ausbringen

von 96,3 % Cu und 99,1 % Zn erhalten, also praktisch mit den gleichen Ausbringungswerten wie bei der erfindungsgemäßen Verfahrensweise.

Der Mehrverbrauch an Chlor und der Minderverbrauch an $H_2SO_4$ des erfindungsgemäßen Kombinationsverfahrens (= KV) gegenüber dem der bekannten sauren Laugung (= SL) entsprechen praktisch den aus der Chlorierung des $NH_3$-Vorlaufs (21,65 g $NH_3$) nach Gleichung (3) errechneten Werten, wie die Angaben der folgenden Tabelle zeigen:

| | Verbrauch (aus den Versuchen) | | Verbrauch (errechnet) | |
|---|---|---|---|---|
| | g $H_2SO_4$ | g $Cl_2$ | g $H_2SO_4$ | g $Cl_2$ |
| KV | 57 | 156,0 | | |
| SL | 250 | 19,1 | | |
| KV-SL | -193 | +136,9 | -186,9 | +135,2 |

Patentansprüche

1. Verfahren zur Aufarbeitung $NH_3$- und/oder $NH_4^+$-haltiger verbrauchter Cu-Ätzlösungen, dadurch gekennzeichnet, daß man in einem Kombinationsverfahren die Lösungen in Gegenwart überschüssiger oxidischer und/oder hydroxidischer NE-metallhaltiger Recycling-Materialien mit elementarem Chlor behandelt und den noch ungelöst verbliebenen Anteil an NE-Metalloxiden und/oder -hydroxiden in bekannter Weise mit mineralischen Abfallsäuren in Lösung bringt und diese Lösung auf ihre Metallinhalte aufarbeitet.

2. Verfahren nach dem Anspruch 1, dadurch gekennzeichnet, daß man die Chlorierung durch Messung des Chlorpotentials verfolgt, wobei ihr Ende durch einen Potentialsprung angezeigt wird.

3. Verfahren nach den Ansprüchen 1 und 2, dadurch gekennzeichnet, daß man die Chlorierung in Gegenwart eines schaumdämpfenden Mittels durchführt.

4. Verfahren nach Anspruch 3, dadurch gekennzeichnet, daß man als schaumdämpfendes Mittel ein Alkoxylat linearer Fettalkohole verwendet.

0002497

Europäisches Patentamt

# EUROPÄISCHER RECHERCHENBERICHT

Nummer der Anmeldung
EP 78 10 1590

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | GB - A - 1 004 650 (DEGUSSA)<br>* Ansprüche 1-5; Beispiel 3 *<br>-- | 1 | C 22 B 7/00<br>3/00<br>C 02 C 5/04 |
| A | US - A - 3 733 266 (D.F. BISHOP) | | |
| A | DE - A - 2 529 647 (BAYER AG) | | |
| A | DE - A - 2 234 971 (INTERNATIONAL NICKEL) | | |
| A | DE - A - 2 112 271 (WIRE SALES CO)<br>---- | | |

RECHERCHIERTE SACHGEBIETE (Int. Cl.²)

C 22 B 7/00
3/00
C 02 C 5/04

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 12-03-1979 | JACOBS |